# EUROPÄISCHE PATENTSCHRIFT

(11) **EP 1 564 162 B1**
(45) Veröffentlichungstag und Bekanntmachung des Hinweises auf die Patenterteilung: **15.08.2007**
(21) Anmeldenummer: 05000419.1
(22) Anmeldetag: 11.01.2005
(51) Int. Cl.: B65G 19/02, B65G 17/00, B65G 57/14

(54) **Vertikalfördervorrichtung**
Vertical conveyor
Dispositif de transport vertical

(30) Priorität: 11.02.2004 DE 102004006719
(43) Veröffentlichungstag der Anmeldung: 17.08.2005
(73) Patentinhaber: WBS Fördertechnik GmbH, 85296 Rohrbach (DE)
(72) Erfinder: Bauer, Edgar, 74706 Osterburken (DE)
(74) Vertreter: Wunderlich, Rainer

(56) Entgegenhaltungen:
- PATENT ABSTRACTS OF JAPAN Bd. 010, Nr. 333 (M-534), 12. November 1986 (1986-11-12) -& JP 61 136820 A (KIYOHISA MURATA), 24. Juni 1986 (1986-06-24)
- PATENT ABSTRACTS OF JAPAN Bd. 008, Nr. 177 (M-317), 15. August 1984 (1984-08-15) & JP 59 069320 A (ARIMITSU KOGYO KK), 19. April 1984 (1984-04-19)
- PATENT ABSTRACTS OF JAPAN Bd. 010, Nr. 333 (M-534), 12. November 1986 (1986-11-12) & JP 61 136823 A (KIYOHISA MURATA), 24. Juni 1986 (1986-06-24)

## Beschreibung

Die Erfindung betrifft eine Vertikalfördervorrichtung gemäß dem Oberbegriff des Anspruchs 1.

Vertikalfördervorrichtungen werden aufgrund ihrer guten Flächen- und Raumausnutzung in unterschiedlichen Bereichen eingesetzt. So ist aus der DE 100 65 709 A1 eine Beschichtungsanlage mit einer Vertikalfördervorrichtung bekannt, mit welcher beschichtete Teile durch einen Trocknungsofen gefördert werden. Durch einen Transport der Werkstücke im Paternosterprinzip vertikal nach oben, kann auf einer relativ kleinen Grundfläche ein relativ langer Transportweg und damit eine gewünschte lange Verweilzeit im Trocknungsofen erreicht werden.

Eine gattungsgemäße Vertikalfördervorrichtung ist aus der DE 196 33 096 C1 bekannt, welche zusätzlich über einen Pufferbereich verfügt. Das Endlosförderelement ist dabei als ein vertikal umlaufender Zahnriemen ausgebildet, an welchem jeweils mittels einer Kopplungseinrichtung schalenförmige Träger zur Aufnahme von Briefen angeordnet sind. Die Kopplungseinrichtung weist dabei ein drehbar gelagertes Zahnrad auf, welches mit dem Zahnriemen in Eingriff steht. Zur Mitnahme des schalenförmigen Trägers mit dem Zahnriemen ist das Zahnrad der Kopplungseinrichtung blockiert. Im Puffbereich kann die Blockade des Zahnrades gelöst werden, so dass die Linearbewegung des Zahnriemens das Zahnrad in Rotation versetzt, jedoch nicht mehr den schalenförmigen Träger in Transportrichtung mitnimmt.

Diese bekannte Kopplungseinrichtung ist mechanisch aufwändig, so dass insgesamt hohe Fertigungskosten für diese Kopplungseinrichtung entstehen. Darüber hinaus ist eine Kraftübertragung zwischen dem Zahnriemen und dem Zahnrad durch die Verzahnungsgeometrie begrenzt, so dass die bekannte Vertikalfördervorrichtung kaum für schwereres Transportgut geeignet ist.

Aus der JP 59 069320 A und der JP 61 136820 A gehen gattungsgemäße Vertikalfördervorrichtungen mit Kopplungseinrichtungen hervor, bei denen ein beweglicher, federgespannter Riegel an einer Förderkette angeordnet ist. Auf dem Riegel liegen die Aufnahmeträger auf.

Der Erfindung liegt die A u f g a b e zugrunde, eine Vertikalfördervorrichtung mit Pufferfunktion anzugeben, welche einen einfachen und robusten Aufbau aufweist.

Die Aufgabe wird nach der Erfindung durch eine Vertikalfördervorrichtung mit den Merkmalen des Anspruchs 1 gelöst. Bevorzugte Ausführungsformen sind in den abhängigen Ansprüchen angegeben.

Der Riegel stellt dabei in der Verriegelungsstellung eine stabile und zuverlässige Mitnahme des Aufnahmeträgers mit dem Endlosförderelement sicher. In der Freilaufstellung erlaubt der Riegel, dass das Endlosförderelement gegenüber dem entkoppelten Aufnahmeträger freiläuft. Ein derartiger beweglicher Riegel kann mechanisch einfach und sehr stabil ausgebildet werden. Als Endlosförderelement können einfache und stabile Förderketten, Bänder oder Stahlseile verwendet werden. Die zwingende Verwendung eines Zahnriemens mit Verzahnungselementen ist bei dem erfindungsgemäßen Vertikalförderer nicht notwendig.

Für eine besondere einfache Entkopplung ist es nach der Erfindung vorgesehen, dass der Pufferbereich in einem Abschnitt ausgebildet ist, in welchem sich das Endlosförderelement nach unten bewegt. Eine besonders bevorzugte Ausführungsform der Erfindung besteht darin, dass der Pufferbereich in Förderrichtung vor einer Eingabe und/oder Ausgabe angeordnet ist. Die Vertikalfördervorrichtung kann somit als ein Puffer oder eine Entkopplungseinrichtung zwischen zwei Fertigungsstationen mit unterschiedlichem Takt eingesetzt werden.

Eine besonders kompakte Lagerung der Aufnahmeträger im Pufferbereich ergibt sich erfindungsgemäß dadurch, dass die Aufnahmeträger im Pufferbereich auf Stoß aufeinander gestapelbar sind. Die Gewichtskraft der aufgestapelten Aufnahmeträger wird dabei vorzugsweise durch den untersten Aufnahmeträger aufgenommen, welcher auf einem entsprechend massiv gestalteten Anschlag oder Tisch aufliegt.

Gemäß der Erfindung ist vorgesehen, dass der Riegel in der Verriegelungsstellung mit einem Bolzen am Endlosförderelement in Eingriff steht.

Bei einem Vertikalförderer können zwei parallel laufende Ketten vorgesehen sein, welche an ihrer jeweils zugewandten Seite Haltebolzen aufweisen, welche mit seitlichen Riegeln der Aufnahmeträger in Eingriff gebracht werden können. Derartige Bolzen sind relativ einfach an den Kettengliedern anzubringen, so dass eine konstruktiv wenig aufwändige, jedoch besonders stabile Kopplungseinrichtung erreicht wird.

Die Verstellbarkeit des Riegels kann durch verschiedenste Einrichtungen erreicht werden, etwa durch einen separaten Antrieb. Es ist eine lineare Verschiebung des Riegels denkbar, welche durch einen Keilschiebermechanismus bewirkt werden kann. Nach der Erfindung ist es jedoch besonders bevorzugt, dass der Riegel verschwenkbar am Aufnahmeträger gelagert ist. Die Lagerung kann dabei so gestaltet sein, dass der Riegel sich durch seine Gewichtskraft in eine horizontale Lage bewegt, während beim Passieren von nachfolgenden Bolzen der Förderkette der Riegel eines sich im Pufferbereich befindlichen Aufnahmeträgers in vertikaler Richtung aufstellt und ausweicht. Im Pufferbereich kann der Aufnahmeträger von der Förderkette ohne Verstellen des Riegels entkoppelt werden.

Eine besonders verschleißarme Weiterbildung der Erfindung liegt darin, dass an jedem Aufnahmeträger ein Stellglied angeordnet ist, welches bei Kontakt mit einem anderen Aufnahmeträger den Riegel von der Verriegelungsstellung in die Freilaufstellung bewegt. Das Stellglied kann am Riegel gelagert sein und nach unten vorstehen, so dass beim Aufsetzen des Aufnahmeträgers auf einen Stapel im Pufferbereich entriegelt wird. Alternativ kann das Stellglied den Riegel des im Pufferbereich nächstfolgenden Aufnahmeträgers so in der Freilaufstellung halten, dass ein Durchlauf des Endlosförderelementes mit eventuell daran angeordneten Bolzen ohne Kontakt mit den aufgestellten Riegeln erfolgt.

Grundsätzlich kann das Zuführen und Abführen von Werkstücken oder ganzen Aufnahmeträgern mit den Werkstücken manuell erfolgen. Nach der Erfindung ist es bevorzugt, dass eine automatische Eingabeeinrichtung und/oder eine automatische Ausgabeeinrichtung vorgesehen ist. Der erfindungsgemäße Vertikalförderer kann so in vollautomatische oder halbautomatische Fertigungsstraßen oder Förder- und Lagereinrichtungen integriert werden.

Die Eingabeeinrichtung und/oder Ausgabeeinrichtung eine Hubeinrichtung aufweist, welche zumindest einen Teil der gestapelten Aufnahmeträger im Pufferbereich anhebt. Hierdurch kann der unterste oder mehrere der unteren Aufnahmeträger nahezu reibungsfrei dem Pufferbereich entnommen werden, da diese von der Gewichtskraft der aufliegenden Aufnahmeträger entlastet sind. Die Hubeinrichtung kann dabei durch einen oder meherere Antriebszylinder, insbesondere Hydraulikzylinder, betätigt werden.

Dabei ist es besonders bevorzugt, dass die Hubeinrichtung einen Schwenkhebelmechanismus aufweist. Durch entsprechende Hebelmechanismen können auch mit relativ geringen Stellkräften die notwendig hohen Hubkräfte zum Entlasten des Aufnahmeträgerstapels im Pufferbereich aufgebracht werden.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Seitenansicht einer Vertikalfördervorrichtung;
- Fig. 2: eine Vorderansicht der Vertikalfördervorrichtung von Fig. 1;
- Fig. 3: eine Detaildarstellung der Eingabe und Ausgabe zu einer Abwandlung der vertikalfördervorrichtung von Fig. 1;
- Fig. 4: eine schematische Auszugsvergrößerung einer Hubeinrichtung gemäß der Darstellung von Fig. 2;
- Fig. 5: eine schematische Seitenansicht eines erfindungs- gemäßen Aufnahmeträgers;
- Fig. 6: eine Vorderansicht des Aufnahmeträgers von Fig. 5 mit beidseitigen Förderketten;
- Fig. 7: eine vergrößerte Detail-Schnittdarstellung gemäß dem Schnitt B-B von Fig. 5;
- Fig. 8: eine Detail-Schnittdarstellung gemäß dem Schnitt C-C gemäß Fig. 5;
- Fig. 9: eine Detail-Schnittdarstellung gemäß dem Schnitt D-D von Fig. 6;
- Fig. 10: eine Detail-Seitenansicht eines Aufnahmeträgers mit einer Kopplungseinrichtung bei der Aufwärtsbewegung;
- Fig. 11: eine Detail-Seitenansicht eines erfindungsgemäßen Aufnahmeträgers im Pufferbereich;
- Fig. 12: eine alternative Ausgestaltung von Aufnahmeträgern für eine erfindungsgemäße Vertikalfördervorrichtung in einer Detail-Seitenansicht des Pufferbereichs; und
- Fig. 13: eine weitere Ausführungsform einer erfindungsgemäßen Vertikalfördervorrichtung in Seitenansicht.

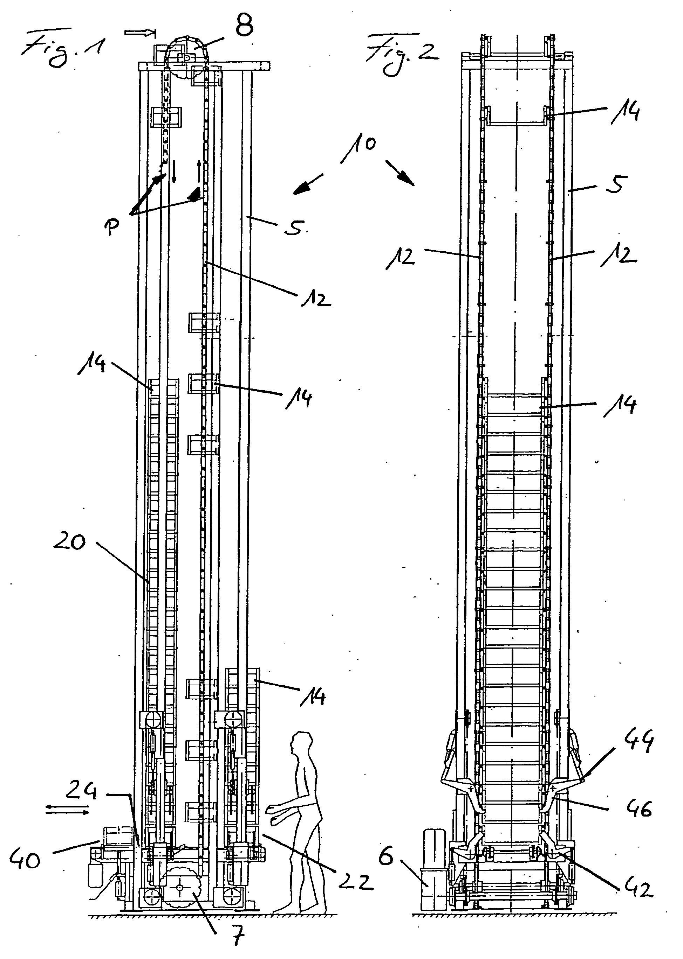

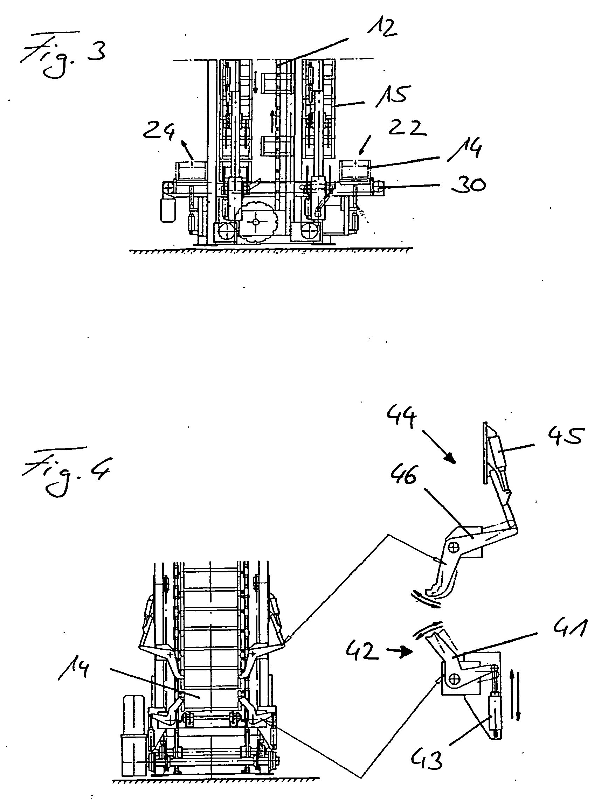

In den Figuren 1 und 2 ist eine Vertikalfördervorrichtung mit einem quaderförmigen Rahmen 5 dargestellt, in welchem zwei Förderketten als Endlosförderelemente 12 umlaufend zwischen einem unteren Antriebsritzel 7 und einem oberen Kettenrad 8 angeordnet sind. Das untere Antriebsritzel 7 wird über einen Antrieb 6 angetrieben, welcher aus einem Elektromotor und einem Getriebe besteht. An den beiden Endlosförderelementen 12 sind eine Vielzahl von Aufnahmeträgern 14 gelagert, auf welchen Werkstücke angeordnet werden können.

Im Bereich einer Eingabe 22 können von einem Vorratsstapel von Aufnahmeträgern 14 manuell Aufnahmeträger 14 an das Endlosförderelement 12 angehängt werden. Im Bereich einer Ausgabe 24, welche der Eingabe 22 gegenüberliegt, können mittels einer automatischen Ausgabeeinrichtung 40 Aufnahmeträger 14 entnommen werden.

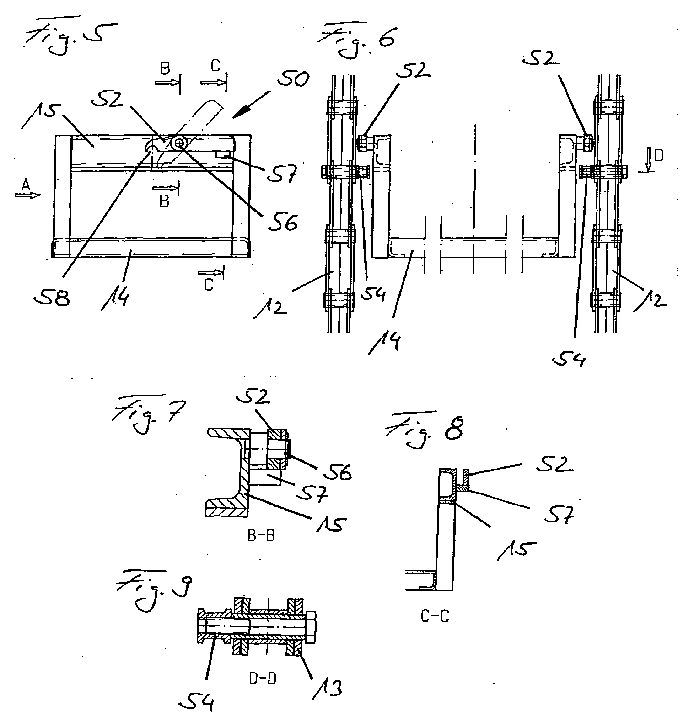

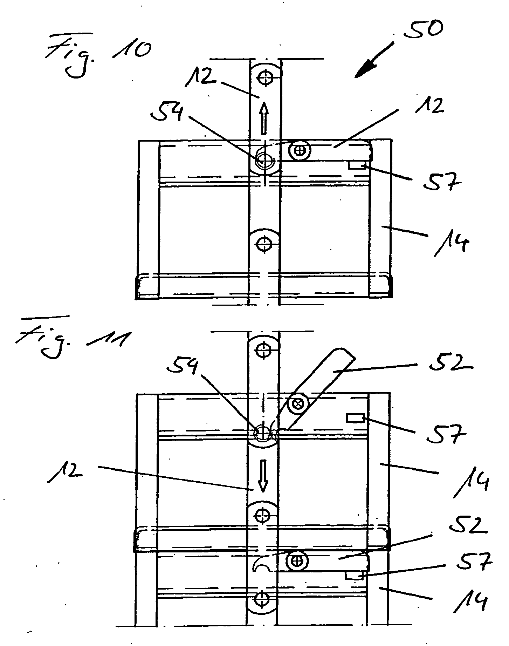

Die Bewegungsrichtung des Endlosförderelementes 12 ist durch Pfeile P dargestellt, wobei sich im Bereich der Eingabe 22 die Aufnahmeträger 14 nach oben und im Bereich der Ausgabe 24 nach unten bewegen. Vor der Ausgabe 24 ist ein Pufferbereich 20 vorgesehen, in welchem eine Vielzahl von Aufnahmeträgern 14 von dem Endlosförderelement 12 entkoppelt und auf Stoß aufgestapelt gelagert werden können. Zur Entnahme der Aufnahmeträger 14 an der Ausgabe 24 weist die Ausgabeeinrichtung 40 eine Hubeinrichtung 44 mit einem Schwenkhebelmechanismus 46 sowie einen stellbaren Anschlag 42 auf, welche nachfolgend im Zusammenhang mit Figur 4 noch näher beschrieben werden.

Gemäß Fig. 3 kann die Eingabe 22 alternativ auch eine automatische Eingabeeinrichtung 30 aufweisen, welche von einem Vorratsstapel 15 mit Aufnahmeträgern 14 einzelne Aufnahmeträger 14 entnimmt und automatisch dem Endlosförderelement 12 zuführt und dieses automatisch an das Endlosförderelement 12 ankoppelt.

Gemäß der schematischen Detailansicht von Fig. 4 weist die Hubeinrichtung 44 einen Schwenkhebelmechanismus 46 mit einem Kniehebel auf, welcher über einen am Rahmen 5 gelagerten Stellzylinder 45 betätigt wird. Durch die beidseitige Anordnung des Schwenkhebelmechanismus 46 kann ein Stapel von Aufnahmeträger 14 im Pufferbereich 20 angehoben werden, so dass der unterste Aufnahmeträger 14 im Stapel entlastet wird.

Zum Bilden des Stapels von Aufnahmeträgern 14 ist ebenfalls beidseitig zu den Aufnahmeträgern 14 ein schwenkbar gelagerter L-förmiger Hebel 41 vorgesehen, welcher mittels eines Hubzylinders 43 in eine nach innen gerichtete Anschlagsposition geschwenkt werden kann. In der Anschlagsposition blockiert der L-förmige Hebel 41 den Transportweg der Aufnahmeträger 14 und sorgt so für das Bilden eines Stapels. Durch entgegengesetztes Verschwenken in die Freigabepostion kann der untereste Aufnahmeträger 14 im Stapel freigegeben und von der Ausgabeeinrichtung 40 entnommen werden.

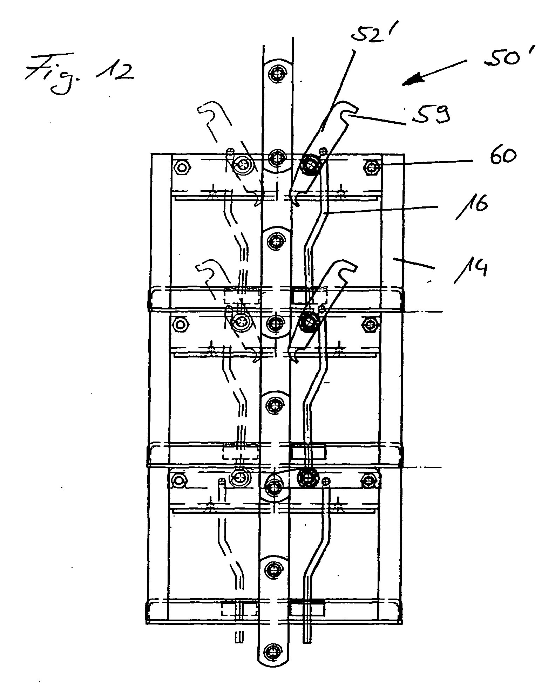

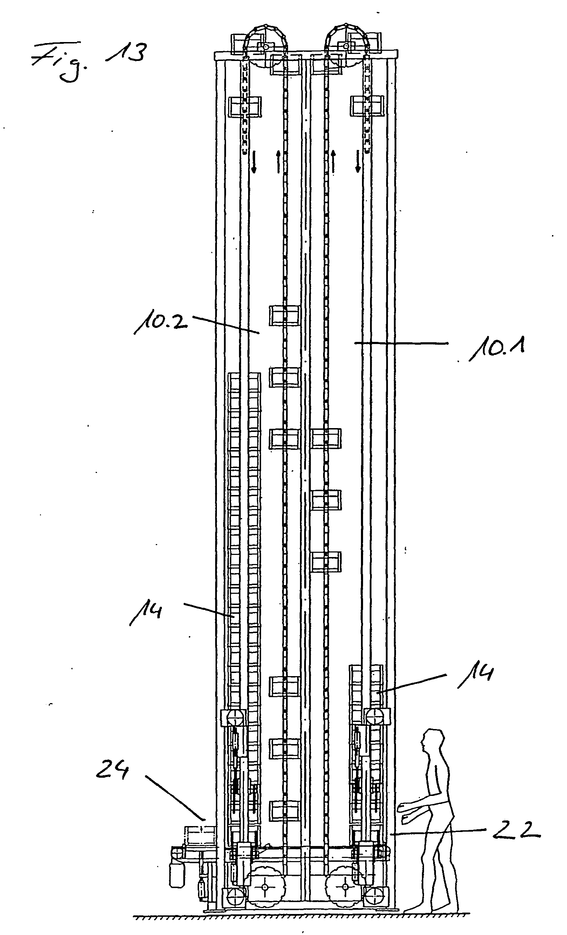

Zum Ein- und Auskoppeln der Aufnahmeträger 14 weisen diese jeweils eine Kopplungseinrichtung 50 auf, welche in Zusammenhang mit den Figuren 5 bis 9 näher beschrieben wird. Der Aufnahmeträger 14 ist aus einem Trägerrahmen 15 aus Metallprofilen zusammengesetzt, an dessen oberen Ende zu beiden Seiten ein Riegel 52 angeordnet ist. Der balkenförmige Riegel 52 weist an seinem einen freien Ende eine nach unten gerichtete, halbkreisförmige Ausnehmung 58 auf, welche zum Eingriff an einem Bolzen 54 an den Endlosförderelementen 12 vorgesehen ist. An der gegenüberliegenden Ende weist der balkenförmige Riegel 52 eine Auflagefläche auf, welche in der Verriegelungssstellung auf einem plattenförmigen Widerlager 57 aufliegt. Aufgrund einer außermittigen Anordnung eines Schwenklagers 56, mit welchem der Riegel 52 verschwenkbar zwischen der dargestellten Verriegelungsstellung und der mit Strichpunktlinie dargestellten Freilaufstellung verschwenkbar ist, wird der Riegel 52 automatisch in der Verriegelungsstellung an dem Widerlager 57 gehalten.

Gemäß Fig. 9 sind die Bolzen 54, mit welchen die Riegel 52 der Aufnahmeträger 14 zur Mitnahme mit dem Endlosförderelement 12 in Eingriff kommen, an Verlängerungen der Gelenke der Kettenglieder 13 des Endlosförderelementes 12 befestigt.

Gemäß den Fig. 10 und 11 wird die Funktionsweise der Kopplungseinrichtung 50 mit dem Riegel 52 näher verdeutlicht. Dabei zeigt Fig. 10 die Verriegelungsstellung des Riegels 52. Der Aufnahmeträger 14 wird mit dem Endlosförderelement 12 nach oben gefördert. Dabei drückt der Bolzen 54 an dem Endlosförderelement 12 gegen den Riegel 52, der auf dem plattenförmigen Widerlager 57 am Aufnahmeträger 14 aufliegt.

Gelangt der Aufnahmeträger 14 bei einer Abwärtsbewegung im Pufferbereich in Kontakt mit einem bereits aufgestapelten Aufnahmeträger 14, wie es Fig. 11 zeigt, so wird der Aufnahmeträger 14 einfach auf den vorhandenen Stapel aufgesetzt. Das Endlosförderelement 12 kann mit dem Bolzen 54 nach unten weiterlaufen, ohne den Riegel 52 zu betätigen. Erst nachfolgende Bolzen 54 des sich bewegenden Endlosförderelementes 12 können die Riegel 52 einfach in eine Freilaufstellung bringen. Bei der in Fig. 11 dargestellten Ausführung, bei welcher der Riegel 52 aufgrund seiner asymmetrischen Gewichtsverteilung zu beiden Seiten des Schwenklagers 56 automatisch wieder in die Verriegelungsstellung gegen das Widerlager 57 klappt, wird die Freilaufstellung also nur beim Vorbeilauf eines Bolzens durch diesen selbst bewirkt.

Eine alternative Ausgestaltung der Kopplungseinrichtung 50 ist in Fig. 12 gezeigt. Bei dieser Kopplungseinrichtung 50' ist ein Riegel 52' ähnlich wie bei der vorgehend beschriebenen Ausführungsform ausgebildet und gelagert. Zusätzlich ist am Riegel 52' ein stabförmiges Stellglied 16 angelenkt, welches nach unten gerichtet ist. Das Stellglied 16 steht dabei in der Verriegelungsstellung geringfügig nach unten gegenüber der Unterseite des Aufnahmeträgers 14 vor. Wird nun ein Aufnahmeträger 14 im Pufferbereich 20 auf den Stapel weiterer Aufnahmeträger 14 aufgesetzt, so wird das Stellglied 16 nach oben geschoben und drückt damit den Riegel 52' in die Freilaufstellung, die in Fig. 12 gezeigt ist. Der Riegel 52' wird durch das Stellglied 16 so lange in der Freilaufstellung gehalten, bis der Aufnahmeträger 14 dem Stapel entnommen wird. Hierdurch wird ein Kontakt zwischen den Bolzen 54 und den Riegeln 52' im Stapel vermieden, was Reibungsverschleiß und Geräuschemission vermindert. Weiterhin weist der Riegel 52' eine hintere Ausnehmung 59 auf, welche zur besseren Fixierung des Riegels 52' am Aufnahmeträger 14 an einem Schraubbolzen 60 beiträgt.

Fig. 13 zeigt eine weitere Ausführungsform der Erfindung, welche aus zwei Vertikalfördervorrichtungen zusammengesetzt ist. Die erste Vertikalfördervorrichtung 10.1 dient zur Stapelung von Aufnahmeträgern 14 vor der Eingabe 22, wäh rend die andere Vertikalfördervorrichtung 10.2 mit der Ausgabe 24 ähnlich der in Zusammenhang mit Fig. 1 beschriebenen Vorrichtung ausgebildet ist. In dieser speziellen Anlage kann sowohl eine Pufferung der Aufnahmeträger 14 vor der Eingabe 22 als auch vor der Ausgabe 24 erfolgen.

## Patentansprüche

1. Vertikalfördervorrichtung mit mindestens einem Endlosförderelement (12), welches in einer im Wesentlichen vertikalen Richtung umläuft und an welchem mehrere Aufnahmeträger (14) mittels jeweils einer Kopplungseinrichtung (50) lösbar befestigt sind, welche in einem Pufferbereich (20) betätigbar ist, wobei das Endlosförderelement (12) vom Aufnahmeträger (14) entkoppelbar ist, wobei
die Kopplungseinrichtung (50) mindestens einen Riegel (52) aufweist, über welchen der Aufnahmeträger (14) am Endlosförderelement (12) gehalten ist,
wobei der Riegel (52) zwischen einer Verriegelungsstellung und einer Freilaufstellung verstellbar ist, **dadurch gekennzeichnet, dass** der Riegel (52) an dem Aufnahmeträger (14) gelagert ist, und dass der Riegel (52) in der Verriegelungsstelllung mit einem Bolzen (54) am Endlosförderelement (12) in Eingriff steht.

2. Vertikalfördervorrichtung nach Anspruch 1,
**dadurch gekennzeichnet,**
**dass** der Pufferbereich (20) in einem Abschnitt vorgesehen ist, in welchem sich das Endlosförderelement (12) nach unten bewegt.

3. Vertikalfördervorrichtung nach Anspruch 1 oder 2,
**dadurch gekennzeichnet,**
**dass** der Pufferbereich (20) in Förderrichtung vor einer Eingabe (22) und/oder Ausgabe (24) angeordnet ist.

4. Vertikalfördervorrichtung nach einem der Ansprüche 1 bis 3,
**dadurch gekennzeichnet,**
**dass** die Aufnahmeträger (14) im Pufferbereich (20) auf Stoß aufeinander stapelbar sind.

5. Vertikalfördervorrichtung nach einem der Ansprüche 1 bis 4,
**dadurch gekennzeichnet,**
**dass** der Riegel (52) verschwenkbar am Aufnahmeträger (14) gelagert ist.

6. Vertikalfördervorrichtung nach einem der Ansprüche 1 bis 5,
**dadurch gekennzeichnet,**
**dass** an jedem Aufnahmeträger (14) ein Stellglied (16) angeordnet ist, welches bei Kontakt mit einem anderen Aufnahmeträger (14) den Riegel (52) von der Verriegelungsstellung in die Freilaufstellung bewegt.

7. Vertikalfördereinrichtung nach einem der Ansprüche 1 bis 6,
**dadurch gekennzeichnet,**
**dass** eine automatische Eingabeeinrichtung (30) und/ oder eine automatische Ausgabeeinrichtung (40) vorgesehen ist.

8. Vertikalfördervorrichtung nach Anspruch 7,
**dadurch gekennzeichnet,**
**dass** die Eingabeeinrichtung (30) und/oder die Ausgabeeinrichtung (40) eine Hubeinrichtung (44) aufweist, welche zumindest einen Teil der gestapelten Aufnahmeträger (14) im Pufferbereich (20) anhebt.

9. Vertikalfördervorrichtung nach Anspruch 8,
**dadurch gekennzeichnet,**
**dass** die Hubeinrichtung (44) einen Schwenkhebelmechanismus (46) aufweist.

## Claims

1. Vertical conveyor having at least one endless conveying element (12), which circulates in a substantially vertical direction and on which several receiving carriers (14) are fixed in a detachable manner by means of a respective coupling device (50) that can be operated in a buffer portion (20), wherein the endless conveying element (12) can be uncoupled from the receiving carrier (14),
the coupling device (50) having at least one bar (52), through which the receiving carrier (14) is held on the endless conveying element (12),
wherein the bar (52) is adjustable between a locking position and a free-running position,
**characterized in that**
the bar (52) is supported on the receiving carrier (14) and
**in that** in the locking position the bar (52) is in engagement with a bolt (54) on the endless conveying element (12).

2. Vertical conveyor according to claim 1,
**characterized in that**
the buffer portion (20) is provided in a section, in which the endless conveying element (12) moves downwards.

3. Vertical conveyor according to claim 1 or 2,
**characterized in that**
the buffer portion (20) is arranged in the conveying direction before a feed-in (22) and/or a feed-out (24).

4. Vertical conveyor according to any one of claims 1 to 3,
**characterized in that**
in the buffer portion (20) the receiving carriers (14) can be stacked upon each other in an abutting manner.

5. Vertical conveyor according to any one of claims 1 to 4,
**characterized in that**
the bar (52) is pivotably supported on the receiving carrier (14).

6. Vertical conveyor according to any one of claims 1 to 5,
**characterized in that**
on each receiving carrier (14) a setting member (16) is arranged which, when being in contact with another receiving carrier (14), moves the bar (52) from the locking position into the free-running position.

7. Vertical conveyor according to any one of claims 1 to 6,
**characterized in that**
an automatic feed-in device (30) and/or an automatic feed-out device (40) is provided.

8. Vertical conveyor according to claim 7,
c h a r a c t e r i z e d in that
the feed-in device (30) and/or the feed-out device (40) has a lifting device (44), which lifts at least a part of the stacked receiving carriers (14) in the buffer portion (20).

9. Vertical conveyor according to claim 8,
c h a r a c t e r i z e d in that
the lifting device (44) has a pivot lever mechanism (46).

## Revendications

1. Dispositif de transport vertical avec au moins un élément de transport sans fin (12) qui circule dans une direction essentiellement verticale et sur lequel plusieurs supports réceptacles (14) sont fixés de manière amovible chacun au moyen d'un dispositif d'accouplement (50), qui peut être actionné dans une zone tampon (20), l'élément de transport sans fin (12) pouvant être découplé du support réceptacle (14), dans lequel
le dispositif d'accouplement (50) comprend au moins un verrou (52) par l'intermédiaire duquel le support réceptacle (14) est tenu sur l'élément de transport sans fin (12),
dans lequel le verrou (52) est mobile entre une position de verrouillage et une position de déplacement libre,
***caractérisé en ce que*** le verrou (52) est placé sur le support réceptacle (14) et ***en ce que**,* dans la position de verrouillage, le verrou (52) est en prise avec un boulon (54) sur l'élément de transport sans fin (12).

2. Dispositif de transport vertical selon la revendication 1, ***caractérisé en ce que*** la zone tampon (20) est prévue dans une section dans laquelle l'élément de transport sans fin (12) se déplace vers le bas.

3. Dispositif de transport vertical selon la revendication 1 ou 2, ***caractérisé en ce que*** la zone tampon (20) est placée, dans la direction de transport, avant une alimentation (22) et/ou une évacuation (24).

4. Dispositif de transport vertical selon l'une quelconque des revendications 1 à 3, ***caractérisé en ce que*** les supports réceptacles (14) peuvent être empilés à plat les uns sur les autres dans la zone tampon (20).

5. Dispositif de transport vertical selon l'une quelconque des revendications 1 à 4, ***caractérisé en ce que*** le verrou (52) est monté pivotant sur le support réceptacle (14).

6. Dispositif de transport vertical selon l'une quelconque des revendications 1 à 5, ***caractérisé en ce que*** sur chaque support réceptacle (14) est placé un organe de manoeuvre (16) qui, en cas de contact avec un autre support réceptacle (14), déplace le verrou (52) de la position de verrouillage vers la position de déplacement libre.

7. Dispositif de transport vertical selon l'une quelconque des revendications 1 à 6, ***caractérisé en ce qu*'**un dispositif d'alimentation automatique (30) et/ou un dispositif d'évacuation automatique (40) est prévu.

8. Dispositif de transport vertical selon la revendication 7, ***caractérisé en ce que*** le dispositif d'alimentation (30) et/ou le dispositif d'évacuation (40) comprend un dispositif de levage (44) qui soulève au moins une partie des supports réceptacles (14) empilés dans la zone tampon (20).

9. Dispositif de transport vertical selon la revendication 8, ***caractérisé en ce que*** le dispositif de levage (44) comprend un mécanisme (46) à bras pivotant.
